# EUROPÄISCHE PATENTSCHRIFT

(11) **EP 4 065 853 B1**
(45) Veröffentlichungstag und Bekanntmachung des Hinweises auf die Patenterteilung: **04.10.2023**
(21) Anmeldenummer: 20829180.7
(22) Anmeldetag: 25.11.2020
(51) Int. Cl.: F16C 41/00, F16C 7/02, F02B 63/04, G01D 11/02, G01M 13/04, H02K 7/18, H02K 7/08

(54) **LAGERANORDNUNG**
BEARING ASSEMBLY
ENSEMBLE PALIER

(30) Priorität: 26.11.2019 AT 510262019
(43) Veröffentlichungstag der Anmeldung: 05.10.2022
(73) Patentinhaber: Miba Gleitlager Austria GmbH, 4663 Laakirchen (AT)
(72) Erfinder: HAGER, Gunther, 4563 Micheldorf (AT); SCHALLMEINER, Stefan, 4662 Steyrermühl (AT); BERGMANN, Philipp, 4810 Gmunden (AT)
(74) Vertreter: Burger, Hannes
(86) Internationale Anmeldenummer: PCT/AT2020/060419
(87) Internationale Veröffentlichungsnummer: WO 2021/102496

(56) Entgegenhaltungen:
- WO-A1-2017/025580
- WO-A1-2017/102815
- DE-C1- 4 315 463
- JP-A- 2004 357 479
- US-A1- 2012 156 034

## Beschreibung

Die Erfindung betrifft eine Lageranordnung umfassend zumindest ein Gleitlagerelement, zumindest einen Verbraucher von elektrischer Energie und zumindest eine Energieerzeugungseinrichtung zur autarken Bereitstellung der elektrischen Energie, wobei die Lageranordnung weiter ein erstes und ein in der Axialrichtung der Lageranordnung neben dem ersten Bauteil angeordnetes zweites Bauteil aufweist, die wiederholend relativ zueinander bewegbar angeordnet sind, und wobei die Energieerzeugungseinrichtung zumindest einen schleifenförmig angeordneten elektrischen Leiter und zumindest einen Permanentmagneten aufweist, wobei der elektrische Leiter an dem ersten Bauteil und der Permanentmagnet an dem zweiten Bauteil angeordnet sind, sodass der schleifenförmig angeordnete elektrische Leiter und der Permanentmagnet durch die wiederholende Relativbewegung der beiden Bauteile zueinander wiederholend in eine gegenüberliegende Stellung bringbar sind.

Weiter betrifft die Erfindung ein Verfahren zur Versorgung eines Verbrauchers von elektrischer Energie, der in einer Lageranordnung umfassend zumindest ein Gleitlagerelement angeordnet ist, mit elektrischer Energie, die in zumindest einer Energieerzeugungseinrichtung der Lageranordnung zur autarken Bereitstellung der elektrischen Energie erzeugt wird, wobei die Lageranordnung weiter ein erstes Bauteil und ein in der Axialrichtung der Lageranordnung neben dem ersten Bauteil angeordnetes zweites Bauteil aufweist, die wiederholend relativ zueinander bewegt werden, und wobei für die Erzeugung der Energie die Energieerzeugungseinrichtung mit zumindest einem schleifenförmig angeordneten elektrischen Leiter und zumindest einem Permanentmagneten ausgebildet wird, wobei der elektrische Leiter an dem ersten Bauteil und der Permanentmagnet an dem zweiten Bauteil angeordnet werden, und der schleifenförmig angeordnete elektrische Leiter und der Permanentmagnet durch die wiederholende Relativbewegung der beiden Bauteile zueinander in eine wiederholende gegenüberliegende Stellung verbracht werden.

In den letzten Jahren erlangte die sensorische Überwachung von Gleitlagern eine immer größere Bedeutung. Neben der indirekten Messung von Gleitlagerparametern, beispielsweise aufgrund der Temperaturerhöhung der Lageraufnahme, steht zunehmend auch die Anordnung von Sensoren im oder in unmittelbarer Nähe zum Schmierspalt im Vordergrund der Entwicklung. Problematisch sind dabei nicht nur die Umweltbedingungen für die Sensorik, sondern auch die Gleitlagern eigenen mechanischen Ausprägungen, wie beispielsweise das Vorhandensein von rotierenden Bauteilen. Beispielhaft sei auf die AT 408 900 B verwiesen, aus der eine Vorrichtung zum Überwachen eines Gleitlagers, das eine in einem Stützkörper eingespannte Lagerschale aufweist, bekannt ist, mit wenigstens einem im Lagerschalenbereich angeordneten Messfühler für temperaturabhängige Messsignale und mit einer Auswerteschaltung für die Messsignale. Der Messfühler ist als Druckfühler für in Umfangsrichtung der Lagerschale wirksame Druckkräfte oder für radiale Druckkräfte zwischen Lagerschale und Stützkörper ausgebildet.

In diesem Zusammenhang stellt sich die Frage der Energieversorgung der Sensoren. Aus dem Stand der Technik ist bereits bekannt, dass die Energiegewinnung direkt im Gleitlager erfolgen soll. So beschreibt z.B. die US 2016/0208849 A1 ein Gleitlager und ein Verfahren zu seiner Herstellung. Das Gleitlager kann ein metallisches Substrat, eine elektrisch isolierende Schicht auf dem metallischen Substrat und eine elektrische Komponente auf der elektrisch isolierenden Schicht umfassen. Das Gleitlager kann operativ mit einem Überwachungsmodul verbunden sein, das konfiguriert ist, um die elektrische Komponente zu überwachen. Die Lagerschale kann Mikrogeneratoren zum lokalen Erzeugen von Energie aus mechanischer Energie aufweisen, z.B. aus mechanischen Schwingungen in der Lagerschale.

Auch aus der EP 2 963 409 A1 ist ein System umfassend eine Mehrzahl von im Wesentlichen identischen Komponenten in Form von selbstschmierenden Rotorneigungssteuerlager eines Hubschraubers bekannt, die unter im Wesentlichen identischen Bedingungen arbeiten, wobei jede der Komponenten mit mindestens einem Sensor zum Messen desselben Betriebsparameters der Komponenten zu einer gegebenen Zeit ausgestattet ist. Weiter umfasst das System eine Überwachungseinheit, die konfiguriert ist, um die Signale der Sensoren zu empfangen und zu verarbeiten und Wartungsdaten basierend auf den Sensorsignalen zu erzeugen. Die Komponenten können mit Energiegewinnungsmitteln zur Erzeugung von Energie aus der Bewegung einer Komponente relativ zu anderen Komponenten versehen sein. Es wird damit ein kontinuierlicher und autonomer Betrieb der Sensoren ermöglicht.

Die WO 2013/160053 A1 beschreibt ein Verfahren zum Überwachen eines Wälzlagers, umfassend den Schritt Erhalten von Daten bezüglich eines oder mehrerer der Faktoren, die die Restlebensdauer des Lagers beeinflussen, unter Verwendung von mindestens einem Sensor, Erhalten von Identifikationsdaten, die das Lager eindeutig identifizieren, Übertragen von Daten zu und/oder von dem mindestens einen Sensor unter Verwendung eines industriellen drahtlosen Protokolls und Aufzeichnen der Daten bezüglich eines oder mehrerer von die Faktoren, die die Restlebensdauer des Lagers und die Identifikationsdaten als aufgezeichnete Daten in einer Datenbank beeinflussen, wobei mindestens ein Sensor konfiguriert ist durch Elektrizität angetrieben zu werden, die durch die Bewegung eines Lagers oder des Lagers erzeugt wird, wenn es in Gebrauch ist.

Aus der DE 10 2007 052 426 A1 ist eine Vorrichtung zur Übertragung von Daten in einem Lager, insbesondere in einem Wälz- oder Gleitlager, an eine außen an dem Lager oder außerhalb des Lagers angeordnete Empfangsvorrichtung bekannt, wobei die Vorrichtung umfasst: einen im Inneren des Lagers angeordneten Signalwandler, der Signale erfasst und diese in Schall umwandelt, und ein Lagerbestandteil des Lagers, insbesondere einen Lagerring des Lagers, wobei in dem Korpus des Lagerbestandteils der Schall als Körperschall übertragen wird.

Die JP 2009-254163 A beschreibt Möglichkeiten zur Versorgung eines vorbestimmten Geräts innerhalb eines Verbrennungsmotors ohne externen Anschluss mit Strom. Eine Stromerzeugungsvorrichtung hat einen Drehstromgenerator, der in einer Pleuelstange der Brennkraftmaschine vorgesehen ist, und einen exzentrischen Rotor zum Aufbringen einer Drehkraft auf den Drehstromgenerator. Der exzentrische Rotor wirkt auf den Drehkraftgenerator und bewirkt, dass dieser durch eine Bewegung der Pleuelstange Kraft erzeugt. Ein Detektor umfasst einen Temperaturmesssensor und einen Sender und ist an einer Position auf der Seite eines kleinen Endes der Verbindungsstange vorgesehen. Die Energieerzeugungsvorrichtung liefert Energie und ist an einer Position an der Seite eines großen Endes vorgesehen. Nach einer Ausführungsvariante kann die Energieerzeugungsvorrichtung auch ein Stapel von Piezoelementen sein.

Aus der EP 1 022 702 A2 ist ein drahtloser Wandler mit Eigenantrieb zum Überwachen äußerer physikalischer Bedingungen, wie etwa übermäßiger Vibrationen in einem Lager, bekannt. Der Wandler enthält eine Energieumwandlungsquelle, wie beispielsweise einen piezoelektrischen Sensor, um den äußeren physikalischen Zustand zu erfassen und ein charakteristisches Signal zu erzeugen, das zur Versorgung einer HF-Sendeschaltung verwendet wird. Ein Sender ist vorgesehen, um Signale zu senden, die den äußeren physischen Zustand oder Änderungen dieses Zustands anzeigen, wie beispielsweise erhöhte Vibrationen in einem Lager, um Lagerfehler vor einem Ausfall zu erfassen. Der autarke drahtlose Wandler enthält eine Spannungsspeichervorrichtung zum Empfangen einer elektrischen Spannung von dem piezoelektrischen Sensor und einen Spannungsdetektor zum Erfassen des Spannungspegels an der Spannungsspeichervorrichtung. Sobald der Spannungsdetektor einen Spannungspegel auf einem vorbestimmten Pegel erfasst, wird eine oszillierende Sendeschaltung für eine kurze Hystereseperiode des Spannungsdetektors aktiviert.

Aus der EP 3 211 202 A1 ist ein Motorsteuersystem für eine Brennkraftmaschine bekannt, das zumindest ein Energieerntemodul mit zumindest einem Energieumwandler und zumindest einem Energiemodul, zumindest einen Sensor zum Erfassen einer physikalischen oder chemischen Messgröße der Brennkraftmaschine, einen Mikrocontroller zum Verarbeiten der erfassten Messgröße und ein Funkmodul zur drahtlosen Übertragung der von dem Mikrocontroller verarbeiteten Messgröße an einen Funkempfänger aufweist, wobei der Mikrocontroller mit dem Sensor und dem Funkmodul kommunizierend verbunden ist und wobei das Energiemodul zur Übertragung von elektrischer Energie zumindest mit dem Mikrocontroller und dem Funkmodul verbunden ist. Weiter weist das System ein Motorsteuergerät auf, das mit dem Funkempfänger kommunizierend verbunden und derart ausgebildet ist, dass es vom Funkempfänger eingehende Messgrößen auswertet, zu Steuersignalen verarbeitet und diese an die Brennkraftmaschine überträgt.

Aus der DE 43 15 463 C1, das die Merkmale des Oberbegriffs von Anspruch 1 offenbart, ist ein im Kurbeltrieb eines Hubkolbenmotors integriertes Stromerzeugungsaggregat bekannt, das eine an einem Bauteil des Kurbeltriebes angeordnete Ankerspule und einen Permanentmagneten umfasst, wobei zwischen der Ankerspule und dem Permanentmagneten bei jeder Umdrehung der Kurbelwelle eine Relativbewegung erfolgt, und wobei die Ankerspule an der Pleuelstange und der Permanentmagnet an einem Kurbelarm eines die Pleuelstange lagernden Kurbelzapfens befestigt sind.

Die JP 2004-357479 A beschreibt ein Pleuel, das eine Spule aufweist, die an der Seitenfläche des großen Endabschnitts der Pleuelstange angeordnet ist. Weiter ist ein Permanentmanget vorgesehen, mit dessen Hilfe durch die Relativbewegung von Spule zu Magnet elektrischer Strom erzeugt wird.

Die WO 2017/025580 A1 beschreibt eine Hubkolbenmaschine, mit zumindest einer mit einer Kurbelwelle verbundenen längenverstellbaren Pleuelstange, welche zumindest einen ersten Stangenteil mit einem kleinen Pleuelauge und zumindest einen zweiten Stangenteil mit einem großen Pleuelauge aufweist, wobei die beiden Stangenteile teleskopartig ineinander verschiebbar sind, wobei eine Längenverstelleinrichtung in zumindest einer Stellung eines Steuerventils mit zumindest einer Hydraulikmediumleitung strömungsverbindbar ist, und in zumindest einer zweiten Stellung des Steuerventils von der Hydraulikmediumleitung trennbar ist, wobei das Steuerventil induktiv betätigbar ist, wobei das Steuerventil mit zumindest einer pleuelstangenfesten Induktionseinrichtung elektrisch verbunden ist, in welcher in zumindest einer Stellung der Pleuelstange mittels zumindest einer Magneteinrichtung ein elektrischer Strom und/oder eine elektrische Spannung induzierbar ist.

Die WO 2017/102815 A1 betrifft eine Hubkolbenmaschine mit zumindest einer mit einem Kurbelzapfen einer Kurbelwelle verbundenen längenverstellbaren Pleuelstange, wobei die Pleuelstange zumindest eine Längenverstelleinrichtung und zumindest ein induktiv betätigbares Steuerventil aufweist, wobei die Pleuelstange zumindest eine Induktionseinrichtung aufweist, die in einer in der Pleuelstange ausgeführten, von zumindest einer Stirnseite der Pleuelstange ausgehenden und von einer Längsachse des Kurbelzapfens in einem Kurbelzapfenabstand entfernt angeordneten Position im Bereich eines großen Pleuelauges der Pleuelstange angeordnet ist, wobei die Induktionseinrichtung mit dem Steuerventil elektrisch verbunden ist und in der Induktionseinrichtung bei einer Drehbewegung der Kurbelwelle mittels zumindest einer kurbelwellenfesten Anregevorrichtung ein elektrischer Strom induzierbar ist.

Aus der US 2012/156034 A1 ist eine Vorrichtung zur Verwendung in einem Stromerzeugungssystem bekannt, wobei die Vorrichtung umfasst: ein Getriebe mit einem Zahnradsatz mit einer ersten Komponente und einer zweiten Komponente, die relativ zur ersten Komponente beweglich sind; einen Anker, der an der ersten Komponente des Zahnradsatzes angebracht ist; einen Magneten, der an der zweiten Komponente des Zahnradsatzes angebracht ist, wobei der Magnet und der Anker so angeordnet sind, dass sie während des Betriebs des Zahnradsatzes eine Relativbewegung zeigen, sodass der Anker einem sich ändernden Magnetfeld ausgesetzt ist, das elektrische Energie erzeugt; und ein elektrisches Gerät innerhalb des Getriebes, wobei das elektrische Gerät elektrisch mit dem Anker gekoppelt ist, sodass das elektrische Gerät von der erzeugten elektrischen Energie gespeist wird.

Der vorliegenden Erfindung liegt die Aufgabe zugrunde, die Energieversorgung eines Verbrauchers von elektrischer Energie in einer Lageranordnung zu verbessern.

Die Aufgabe wird bei der eingangs genannten Lageranordnung dadurch gelöst, dass an dem ersten Bauteil ein zweiter Permanentmagnet und an dem zweiten Bauteil ein zweiter elektrischer Leiter angeordnet sind, sodass die schleifenförmig angeordneten elektrischen Leiter und die Permanentmagneten durch die wiederholende Relativbewegung der beiden Bauteile zueinander wiederholend in eine gegenüberliegende Stellung bringbar sind, wobei das erste Bauteil eine Pleuelstange eines Kurbeltriebes ist und das zweite Bauteil eine zweite Pleuelstange des Kurbeltriebes ist, oder das erste Bauteil eine Pleuelstange eines Kurbeltriebes ist und das zweite Bauteil eine Kurbelwange des Kurbeltriebes ist, und dass an der in der Axialrichtung von der Pleuelstange wegweisenden Stirnseite der Kurbelwange ein weiteres Bauteil des Kurbeltriebes angeordnet ist, und auf diesem weiteren Bauteil ein weiterer schleifenförmig angeordneter elektrischer Leiter angeordnet ist, und der Permanentmagnet in einer in der Axialrichtung durch den zweiten Bauteil durchgehenden Ausnehmung angeordnet ist.

Weiter wird die Aufgabe bei dem eingangs genannten Verfahren dadurch gelöst, dass an dem ersten Bauteil ein zweiter Permanentmagnet und an dem zweiten Bauteil ein zweiter elektrischer Leiter angeordnet werden, sodass die schleifenförmig angeordneten elektrischen Leiter und die Permanentmagneten durch die wiederholende Relativbewegung der beiden Bauteile zueinander wiederholend in eine gegenüberliegende Stellung verbracht werden, oder als erstes Bauteil eine Pleuelstange eines Kurbeltriebes und als zweite Bauteil eine Kurbelwange des Kurbeltriebes verwendet werden, und dass an der in der Axialrichtung von der Pleuelstange wegweisenden Stirnseite der Kurbelwange ein weiteres Bauteil des Kurbeltriebes angeordnet wird, und auf diesem weiteren Bauteil ein weiterer schleifenförmig angeordneter elektrischer Leiter angeordnet wird, und der Permanentmagnet in einer in der Axialrichtung durch den zweiten Bauteil durchgehenden Ausnehmung angeordnet wird.

Von Vorteil ist dabei, dass die Energieerzeugungseinrichtung relativ weit entfernt von problematischen Bereichen in der Lageranordnung, wie beispielsweise dem heißen Lagerbereich, angeordnet werden kann, und damit auch eine hohe Betriebssicherheit aufweisen kann. Zudem kann der elektrische Leiter hinsichtlich seiner geometrischen Anordnung einfacher an die Gegebenheiten in der Lageranordnung angepasst werden, ohne dass damit ein (wesentlicher) Verlust an Leistungsfähigkeit der Energieerzeugungseinrichtung einhergeht. Es ist dabei weiter von Vorteil, dass die Energieerzeugungseinrichtung einerseits einfach in bestehende Lageranordnungen nachrüstbar ist und andererseits durch Anordnung des weiteren schleifenförmig angeordneten elektrischen Leiters einfach aufrüstbar ist.

Gemäß der bevorzugten Ausführungsvariante der Erfindung kann vorgesehen sein, dass der Verbraucher von elektrischer Energie zumindest einen Sensor aufweist, der mit einer Datenübertragungseinrichtung zur, insbesondere drahtlosen, Datenübertragung an einen Empfänger der Daten verbunden ist, da damit wichtige Lagerparameter einfacher überwacht werden können.

Das erste Bauteil kann eine Pleuelstange eines Kurbeltriebes und das zweite Bauteil eine Kurbelwange des Kurbeltriebes sein. Von Vorteil ist dabei, dass die Überwachung von Betriebsparametern oder Verschleißwerten im Bereich der Kurbelwelle ohne größere Veränderungen der bewegten Massen möglich ist, bzw. die zusätzliche Masse ohne konstruktive Änderungen einfach durch Anpassung der ohnehin vorhandenen Ausgleichsgewichte möglich ist. Zur Versorgung von zumindest einem weiteren Verbraucher mit elektrischer Energie ist dabei vorgesehen, dass an der in der Axialrichtung von der Pleuelstange wegweisenden Stirnseite der Kurbelwange ein weiteres Bauteil des Kurbeltriebes angeordnet ist, und dass auf diesem weiteren Bauteil ein weiterer schleifenförmig angeordneter elektrischer Leiter angeordnet ist. Es können damit zumindest zwei elektrische Leiter mit nur einem Permanentmagneten bedient werden, womit der konstruktive Aufwand der Energieerzeugungseinrichtung vereinfacht werden kann.

Zur Steigerung der Effizienz der Energieausbeute kann gemäß einer anderen Ausführungsvariante der Erfindung vorgesehen sein, dass der schleifenförmig angeordnete elektrische Leiter in einem ersten Totpunkt des Kurbeltriebes angeordnet ist.

Aus voranstehend genannten Gründen ist nach einer Ausführungsvariante der Erfindung auch der weitere schleifenförmig angeordnete elektrische Leiter in einem der Totpunkte des Kurbeltriebes angeordnet.

Gemäß einer anderen Ausführungsvariante kann auch vorgesehen sein, dass das weitere Bauteil ein Zahnrad oder eine Hauptlageraufnahme des Kurbeltriebes ist. Durch die Anordnung auf dem Zahnrad, kann auch dieses hinsichtlich Betriebsparameter einfach überwacht werden. Die Anordnung auf der Hautlageraufnahme ermöglich andererseits weitere Bauteile des Kurbeltriebes zu überwachen.

Es kann gemäß einer weiteren Ausführungsvariante der Erfindung der Sensor in die radial innerste Schicht des Gleitlagerelementes eingebettet sein, wodurch die Messwerterfassung verbessert werden kann, da Störeffekte, die auftreten können, wenn der Sensor weiter weg vom Schmierspalt ist, weitestgehend vermieden werden können.

Es kann gemäß einer weiteren Ausführungsvariante der Erfindung vorgesehen sein, dass die Datenübertragungseinrichtung am oder zumindest teilweise in einem Pleuelschaft der Pleuelstange angeordnet ist, sodass die Pleuelaugen hiervon unberührt für die Anordnung des Sensors zur Verfügung stehen, und damit die Position des Sensors relativ frei gewählt werden kann.

Um die Kompaktheit der Anordnung zur Bestimmung von Betriebsparametern des Gleitlagerelementes zu verbessern, kann gemäß einer Ausführungsvariante der Erfindung vorgesehen sein, dass die Telemetrie-Vorrichtung an oder zumindest teilweise in der Lageraufnahme angeordnet ist.

Zum besseren Verständnis der Erfindung wird diese anhand der nachfolgenden Figuren näher erläutert.

Es zeigen jeweils in vereinfachter, schematischer Darstellung:
- Fig. 1: eine erste Ausführungsvariante der Lageranordnung in einer ersten Stellung in Seitenansicht;
- Fig. 2: die erste Ausführungsvariante der Lageranordnung in einer zweiten Stellung in Seitenansicht;
- Fig. 3: eine nicht erfindungsgemäße Lageranordnung in Seitenansicht;
- Fig. 4: die Lageranordnung nach Fig. 3 in Stirnansicht;
- Fig. 5: einen Ausschnitt aus einer weiteren Ausführungsvariante der Lageranordnung in Ansicht von vorne.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

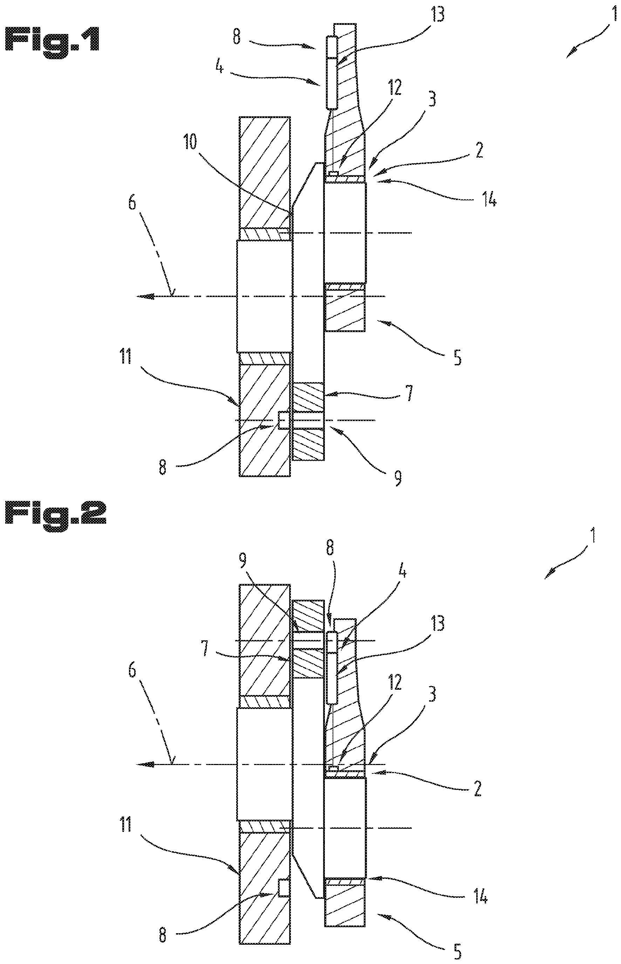

In den Fig. 1 und 2 ist ein Ausschnitt aus einer ersten Ausführungsvariante einer Lageranordnung 1 in verschiedenen Stellungen in Seitenansicht dargestellt.

Die erste Ausführungsvariante betrifft insbesondere einen Kurbeltrieb, in dem die Lageranordnung 1 angeordnet ist, bzw. von dem sie ein Teil ist. Insofern betrifft die Erfindung auch ein Getriebe, wie beispielsweise ein Schubkurbelgetriebe, von dem der Kurbeltrieb ein Teil ist, oder ein Zahnradgetriebe, wie dies im Nachfolgenden noch ausgeführt wird. Die Lageranordnung 1 ist also insbesondere ein Teil eines Getriebes.

Die Lageranordnung 1 umfasst zumindest ein Gleitlagerelement 2. Es können zwei Gleitlagerelemente 2, die die Form von sogenannten Halbschalen haben, eingesetzt sein. Es besteht jedoch auch die Möglichkeit, dass das Gleitlagerelement 2 als Gleitlagerbuchse ausgebildet ist. Zudem kann das mit den Gleitlagerelementen 2 ausgestattete Gleitlager eine andere Teilung aufweisen, sodass also beispielsweise drei oder vier oder mehr als vier Gleitlagerelemente 2 in dem Gleitlager verbaut sein können. In sehr großen Gleitlagern, wie sie beispielsweise in Windenergieanlagen eingesetzt werden, können die Gleitlagerelemente 2 beispielsweise auch als Gleitlagerpads ausgebildet sein, wobei in diesen Fällen deutlich mehr als vier Gleitlagerelemente 2, beispielsweise bis zu 40 Gleitlagerelemente 2, im Gleitlager vorhanden sein können.

Das zumindest eine Gleitlagerelement 2 ist in einer Lageraufnahme 3 angeordnet, beispielsweise mittels einer Presspassung.

Es besteht jedoch auch die Möglichkeit, dass die Lageraufnahme 3 direkt beschichtet ist, sodass die Lageraufnahme 3 auch die Gleitfläche für ein in der Gleitlageranordnung 1 gelagertes Bauteil, beispielsweise eine Welle 4, bildet. In diesem Fall sind das Gleitlagerelement 2 und die Lageraufnahme 3 einstückig miteinander ausgebildet, sodass das das Gleitlagerelement 2 einen integralen Bestandteil der Lageraufnahme 3 bildet.

Bei diesen Ausführungsvarianten der Lageranordnung 1 bildet die Gegenlauffläche des Gleitlagers die Oberfläche der Welle bzw. generell dem gelagerten Bauteil. Es besteht jedoch auch die umgekehrte Möglichkeit der Anordnung des zumindest einen Gleitlagerelementes 2, nämlich die drehfeste Verbindung mit dem gelagerten Bauteil. In diesem Fall wird die Gegenlauffläche durch die Oberfläche der Lageraufnahme 3 gebildet, in der das Gleitlager im zusammengebauten Zustand der Lageranordnung 1 zwar aufgenommen aber nicht drehfest damit verbunden ist.

Das zumindest eine Gleitlagerelement 2 und die Lageraunahme 3 sind Teil der Lageranordnung 1, die neben diesen beiden Bestandteilen auch noch zumindest einen Verbraucher 4 von elektrischer Energie, zumindest eine Energieerzeugungseinrichtung zur autarken Bereitstellung der elektrischer Energie, ein erstes Bauteil 5 und ein in einer Axialrichtung 6 der Lageranordnung 1 neben dem ersten Bauteil 5 angeordnetes zweites Bauteil 7 aufweist. Das erste Bauteil 5 ist relativ zum zweiten Bauteil 7 bewegbar angeordnet, wobei die Relativbewegung wiederholend ist.

In der in den Fig. 1 und 2 dargestellten Ausführungsvariante Lageranordnung ist das erste Bauteil 5 eine Pleuelstange eines Kurbeltriebes und das zweite Bauteil 7 eine Kurbelwange des Kurbeltriebes ist. Generell kann die Lageranordnung aber auch anders ausgeführt, sein, sodass also das erste und das zweite Bauteil 5, 7 auch anders gestaltet sein können.

Die Energieerzeugungseinrichtung umfasst einen schleifenförmig angeordneten elektrischen Leiter 8 und einen Permanentmagneten 9 oder besteht daraus. Der elektrische Leiter 8 ist an dem ersten Bauteil 5 und der Permanentmagnet 9 ist an dem zweiten Bauteil 7 angeordnet, sodass der schleifenförmig angeordnete elektrische Leiter 8 und der Permanentmagnet 9 durch die wiederholende Relativbewegung der beiden Bauteile 5, 7 zueinander wiederholend in eine gegenüberliegende Stellung bringbar sind.

Die Lageranordnung 1 weist mehr als eine Energieerzeugungseinrichtungen auf. Beispielswiese können zwei oder mehrere oder jede Pleuelstange eines Kurbeltriebes mit einem schleifenförmigen elektrischen Leiter 8 versehen sein, insbesondere wenn jede Pleuelstange mit einem Verbraucher 4 versehen ist.

Der schleifenförmig angeordnete elektrische Leiter 8 kann eine Spule, beispielsweise eine Zylinderspule oder eine Ringspule, sein, bei der mehrere Windungen auf einem Kern ausgebildet sind, wie dies an sich für derartige Spulen bekannt ist. Bevorzugt ist der elektrische Leiter aber als gedruckte Leiterschleife ausgeführt, die insbesondere mehrere Schleifen aufweist. Die elektrische Energie wird somit durch das Vorbeibewegen des Permanentmagneten 9 an dem elektrischen Leiter 8 durch elektromagnetische Induktion erzeugt.

Der elektrische Leiter 8 besteht insbesondere auch Kupfer, kann jedoch auch aus einem anderen Metall oder einer Metalllegierung bestehen, beispielsweise aus Silber.

Der schleifenförmig ausgebildete elektrische Leiter 8 kann auf dem ersten Bauteil 5, also insbesondere der Pleuelstange, oder zumindest teilweise in einer Ausnehmung des ersten Bauteils, beispielsweise in einer Vertiefung der Pleuelstange, angeordnet sein.

Der Permanentmagnet 9 kann beispielsweise als Nd-Fe-B Magnet ausgeführt sein. Es sind aber auch andere Werkstoffe mit dauermagnetischen Eigenschaften einsetzbar.

Der zumindest eine Permanentmagnet 9 kann auf dem zweiten Bauteil 7, also insbesondere der Kurbelwange (auch als Gegengewicht bzw. Schwungmasse bezeichenbar), oder zumindest teilweise in einer Ausnehmung des zweiten Bauteils 7, beispielsweise einer Vertiefung in der Kurbelwange, angeordnet sein.

Der zumindest eine Permanentmagnet 9 kann in einer in der Axialrichtung 6 durch das zweite Bauteil 7 durchgehenden Ausnehmung angeordnet sein, wie dies aus den Fig. 1 und 2 ersichtlich ist. Es ist damit möglich, dass an einer in der Axialrichtung 6 von dem ersten Bauteil 5, insbesondere der Pleuelstange, wegweisenden Stirnfläche 10 des zweiten Bauteils 7, insbesondere der Kurbelwange, ein weiteres Bauteil 11 der Lageranordnung 1, insbesondere des Kurbeltriebes, angeordnet ist, und dass auf diesem weiteren Bauteil 11 ein weiterer schleifenförmig angeordneter elektrischer Leiter 8 angeordnet ist. Es ist auf diese Weise möglich mit nur einer Anordnung von einem oder mehreren Permanentmagneten 9 auf dem zweiten Bauteil 7 mehrere Positionen mit schleifenförmig angeordneten elektrischen Leitern 8 wiederholend zu überstreichen, sodass mit weniger Bauteilen zwei Energieerzeugungseinrichtungen zur Verfügung gestellt werden können.

Das weitere Bauteil 11 kann beispielsweise ein Zahnrad sein, z.B. ein Zahnrad zu einer Ausgleichswelle des Kurbeltriebes. Es kann aber eine Kappe eines Gehäuses sein, in dem der Kurbeltrieb angeordnet ist, sodass über elektrische Leitungen auf oder im Gehäuse die erzeugte elektrische Energie auch an einen anderen/entfernteren Ort weitergeleitet werden kann, der Verbraucher 4 also nicht in der Nähe des schleifenförmig angeordneten elektrischen Leiters 8 angeordnet werden soll, wie dies bevorzugt bei der Stromversorgung des Verbrauchers 4 auf der Pleuelstange der Fall ist. Weiter kann das weitere Bauteil 11 eine Hauptlageraufnahme des Kurbeltriebes sein.

Die schleifenförmig angeordneten elektrischen Leiter 8 können prinzipiell an jeder geeigneten Stelle an dem ersten Bauteil 5 (erster elektrischer Leiter 8) bzw. weiteren Bauteil 11 (zweiter elektrischer Leiter 8) angeordnet sein. Nach einer bevorzugten Ausführungsvariante der als Kurbeltrieb ausgebildeten Lageranordnung 1 sind der oder die schleifenförmig angeordnete(n) elektrische(n) Leiter 8 jedoch in einem ersten Totpunkt des Kurbeltriebes angeordnet, also im oberen bzw. im unteren Totpunkt wie dies in den Fig. 1 und 2 gezeigt ist, wobei die Fig. 1 den oberen Totpunkt und die Fig. 2 den unteren Totpunkt zeigt.

Der Begriff "Totpunkt" ist im Zusammenhang mit Kurbeltrieben ausreichend bekannt. Es sei dazu angemerkt, dass der obere Totpunkt jene Lage ist, bei der der auf der Pleuelstange angeordnete Kolben die größte Entfernung von der Kurbelwelle hat. Der untere Totpunkt ist demnach die Lage, bei der der Kolben die kleinste Entfernung von der Kurbelwelle hat. Anders ausgedrückt sind die Totpunkte jene Lagen, bei denen der Kolben keine Axialbewegung erfährt. Wenn nun im Sinne der Erfindung angegeben ist, dass der schleifenförmig angeordnete elektrische Leiter 8 in einem Totpunkt des Kurbeltriebes angeordnet ist, dann bedeutet dies, dass der schleifenförmig angeordnete elektrische Leiter 8 so angeordnet ist, dass er in der oberen oder der unteren Totpunktlage dem Permanentmagneten 9 gegenüberliegt.

In Hinblick auf die Angabe "an dem Bauteil" sei angemerkt, dass damit "auf" und auch "zumindest teilweise in" dem Bauteil, also beispielsweise in einer Vertiefung des Bauteils, mitumfasst sind.

Bevorzugt ist der schleifenförmig angeordnete elektrische Leiter 8 ortsfest am Kurbelwellengehäusedeckel oder Kurbelgehäuse angeordnet. Der weitere schleifenförmig angeordnete elektrische Leiter 8 ist bevorzugt ortsfest an der Pleuelstange am Pleuelschaft oder Deckel des Pleuel befestigt.

Der Verbraucher 4 von elektrischer Energie kann nach einer weiteren Ausführungsvariante der Lageranordnung 1 zumindest einen Sensor 12 umfassen. Selbstverständlich können auch mehr als ein Sensor 12 in der Lageranordnung 1 angeordnet sein.

Der Sensor 12 kann beispielsweise ein Temperatursensor, ein Drucksensor, etc. sein. Mithilfe des zumindest einen Sensors 12 können Parameter der Lageranordnung 1 im Betrieb erfasst werden. Anhand dieser Parameter kann z.B. auf den Zustand des zumindest einen Gleitlagerelementes 2 rückgeschlossen werden, da beispielsweise bei einer anormalen Temperaturerhöhung auf den Verschleiß der Gleitfläche des Gleitlagerelementes 2 bzw. das Versagen des Gleitlagerelementes 2 geschlossen werden kann. Es können also mit dem Sensor 12 für den Betrieb der Lageranordnung 1 wesentliche Parameter erfasst werden.

Bevorzugt erfolgt die Verarbeitung der erfassen Parameter, d.h. der zugehörigen Daten, nicht in der Lageranordnung 1 selbst, sondern in einem Datenverarbeitungselement, das beabstandet zu dem zumindest einem Gleitlagerelement 2 angeordnet ist. Für die Datenübertragung zu diesem zumindest einem Datenverarbeitungselement kann die Lageranordnung 1 gemäß einer weiteren Ausführungsvariante als elektrischen Verbraucher 4 eine Telemetrie-Vorrichtung 13 mit eine Datenübertragungseinrichtung aufweisen, die die Daten von dem zumindest einen Sensor 12 empfängt und an das zumindest eine Datenverarbeitungselement als Datenempfänger weiterleitet, insbesondere drahtlos. Für die drahtlose Datenübertragung können die bekannten Protokolle verwendet werden. Die drahtlose Datenübertragung kann beispielsweise mittel Bluetooth oder WLAN, etc., erfolgen.

Da derartige Systeme der Datenerfassung in Gleitlagerelementen und der drahtlosen Übertragung an eine dazu externe Stelle an sich bereits aus dem für Gleitlager einschlägigen Stand der Technik bekannt sind, sei zur Vermeidung von Wiederholungen zu weiteren Einzelheiten dazu auf diesen Stand der Technik verwiesen.

Die Telemetrie-Vorrichtung 13 kann an oder zumindest teilweise in dem ersten Bauteil 5 angeordnet sein, beispielsweise einem Pleuelschaft der Pleuelstange des Kurbeltriebes.

Der zumindest eine Sensor 12 kann beispielsweise ein piezoaktives bzw. piezoelektrisches Element sein. Weiter kann der zumindest eine Sensor 12 für die Beaufschlagung mit Drücken bis zu 10.000 bar ausgelegt sein.

Der Sensor 12 kann mittels einer Leitung mit einem Schmierspalt 14 des Gleitlagers verbunden sein. Alternativ oder zusätzlich dazu kann nach einer weiteren Ausführungsvariante der Lageranordnung 1 vorgesehen sein, dass der Sensor 12 im Schmierspalt 14 angeordnet wird, beispielsweise als Teil der Gleitschicht des Gleitlagerelementes 2. Auch damit ist wie bei der voranstehend genannten Ausführungsvariante der Lageranordnung 1 der Sensor 12 mit dem Schmiermitteldruck im Schmierspalt 14 beaufschlagbar.

Nach einer anderen Ausführungsvariante der Lageranordnung 1 kann vorgesehen sein, dass der Sensor 12 in eine radial innerste Schicht des Gleitlagerelementes 2 eingebettet ist. Das Gleitlagerelement 2 kann nämlich als sogenanntes Mehrschichtgleitlager ausgebildet sein und zumindest eine Gleitschicht und eine Stützschicht aufweisen. Zwischen diesen können weitere Schichten, wie beispielsweise eine Lagermetallschicht und/oder eine Bindeschicht und/oder eine Diffusionssperrschicht, etc. angeordnet sein. Die Gleitschicht ist dabei bekanntlich jene Schicht, auf der die Welle 4 im Betrieb abgleitet. Die Gleitschicht kann beispielsweise aus einem keramischen Werkstoff oder aus einem Gleitlack bestehen. Alternativ dazu kann aber auch vorgesehen sein, dass der Sensor 12 in einer unterhalb der Gleitschicht angeordneten Schicht angeordnet ist und von der Gleitschicht über eine elektrisch isolierende Schicht, beispielsweise eine keramische Schicht, z.B. aus Al₂O₃, getrennt ist. In diesem Fall kann die Gleitschicht auch aus einem bekannten, metallischen Werkstoff, beispielsweise einer Zinnbasislegierung, bestehen.

Es sei darauf hingewiesen, dass im Falle einer Direktbeschichtung, wie diese voranstehend erwähnt wurde, die Stützschicht durch das jeweilige direktbeschichtete Bauteil gebildet ist.

Es können auch mehrere Sensoren 12 an unterschiedlichen Stellen in dem Gleitlagerelement 2 oder an dem Gleitlagerelement 2 angeordnet werden, sodass die Betriebsparameter unterschiedlich belasteter Stellen in der Lageranordnung 1 erfasst werden können.

Mit dem Sensor 12 oder den Sensoren 12 können Betriebsparameter des großen Pleuelauges und/oder des kleinen Pleuelauges der Pleuelstange eines Kurbeltriebes erfasst werden.

Die voranstehend genannte Telemetrie-Vorrichtung 13 kann als Bestandteile z.B. die Datenübertragungseinrichtung, einen Mikroprozessor 30, ein Analog-Digital-Wandler 31, etc., aufweisen. Gegebenenfalls kann auch der schleifenförmig angeordnete elektrische Leiter 8 ein Bestandteil der Telemetrie-Vorrichtung 13 sein.

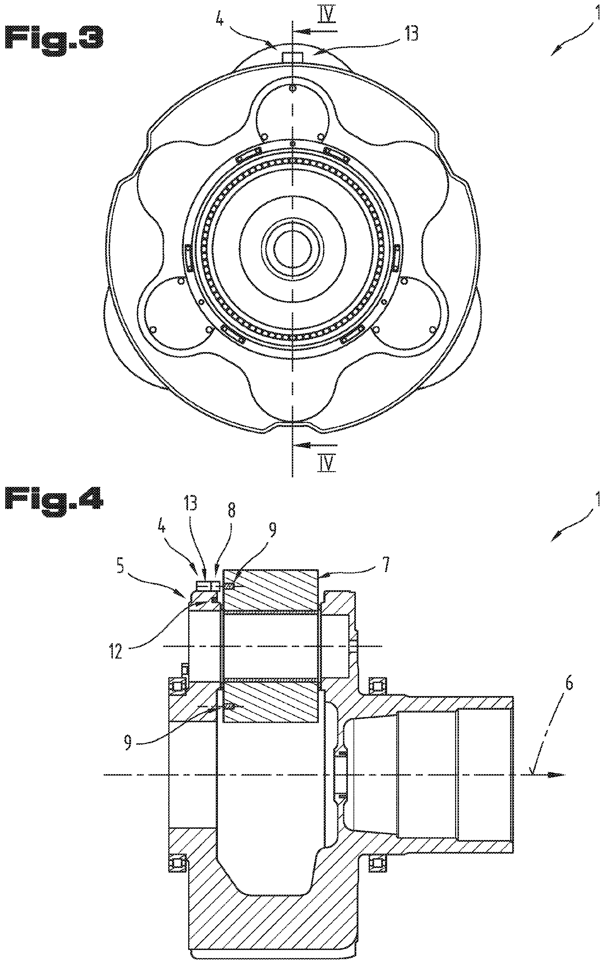

In den Fig. 3 und 4 ist eine nicht erfindungsgemäße Lageranordnung 1 gezeigt.

Bei der in den Fig. 3 und 4 dargestellten Lageranordnung 1 ist das erste Bauteil 5 ein Planetenträger eines Planetengetriebes und das zweite Bauteil 7 ein Planetenrad des Planetengetriebes ist. Der Verbraucher 4 von elektrischer Energie ist ebenso wie der schleifenförmige angeordnete Leiter 8 auf dem ersten Bauteil 5 angeordnet. Der elektrische Verbraucher 4 kann beispielsweise wiederum die voranstehend genannte Telemetrie-Vorrichtung 13 und/oder ein Sensor 12 sein. Der Sensor 12 kann gemäß einer Ausführungsvariante in einer Bohrung einer Planetenachse des Planetengetriebes angeordnet sein.

Der Permanentmagnet 9 ist in einer Ausnehmung im als Planetenrad ausgebildeten zweiten Bauteil 7 angeordnet. Durch die Drehbewegung des Planetenrades entsteht die wiederkehrende gegenüberliegende Stellung der Bauteile Permanentmagnet 9 und schleifenförmig angeordneter elektrischer Leiter 8.

Es sei darauf hingewiesen, dass bei sämtlichen Ausführungsvarianten der Lageranordnung 1 zwischen dem schleifenförmig angeordneten Leiter 8 und dem Permanentmagnet 9 kein direkter Kontakt im Sinne einer gegenseitigen Berührung der beiden Bauteile besteht oder entsteht.

Es ist mit der Erfindung möglich, einen Verbrauchers 4 von elektrischer Energie, der in einer Lageranordnung 1 umfassend zumindest ein Gleitlagerelement 2 angeordnet ist, mit elektrischer Energie, die in zumindest einer Energieerzeugungseinrichtung der Lageranordnung 1 zur autarken Bereitstellung der elektrischen Energie erzeugt wird, zu versorgen, wobei die Lageranordnung 1 weiter ein erstes Bauteil 5 und ein in der Axialrichtung 6 der Lageranordnung 1 neben dem ersten Bauteil 5 angeordnetes zweites Bauteil 7 aufweist, die wiederholend relativ zueinander bewegt werden. Für die Erzeugung der Energie wird die Energieerzeugungseinrichtung mit zumindest einem schleifenförmig angeordneten elektrischen Leiter 8 und zumindest einem Permanentmagneten 9 versehen, wobei der elektrische Leiter 8 an dem ersten Bauteil 5 und der Permanentmagnet 9 an dem zweiten Bauteil 7 angeordnet werden, und der schleifenförmig angeordnete elektrische Leiter 8 und der Permanentmagnet 9 durch die wiederholende Relativbewegung der beiden Bauteile 5, 7 zueinander in eine wiederholende gegenüberliegende Stellung verbracht werden.

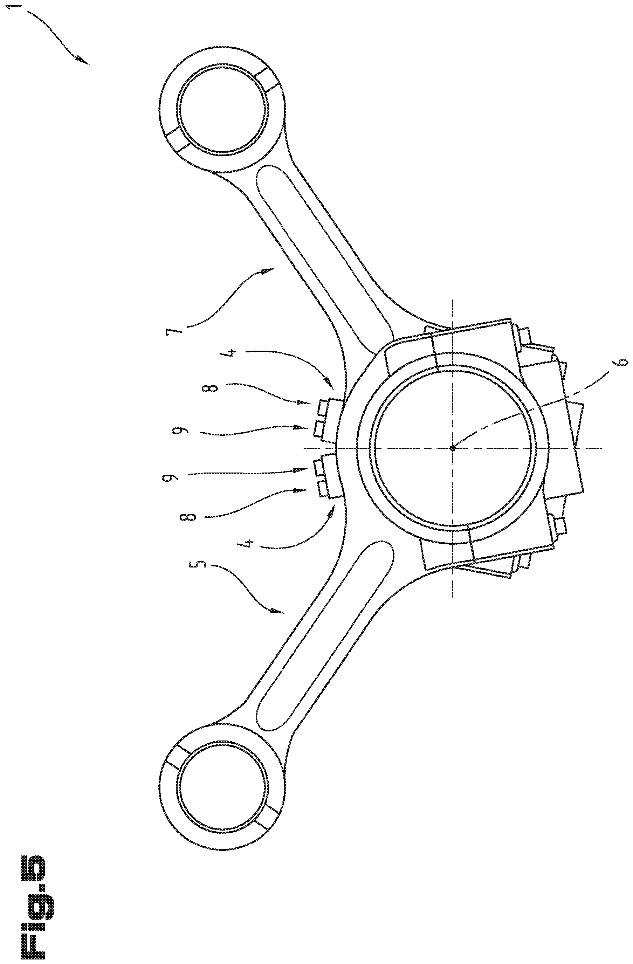

In den Fig. 5 ist ein Ausschnitt einer weiteren Ausführungsvariante der Lageranordnung 1 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung zu den Bauteilen in der voranstehenden Beschreibung der Fig. 1 bis 4 hingewiesen bzw. darauf Bezug genommen.

Die Fig. 5 zeigt zwei Pleuelstangen eines Kurbeltriebes. Es ist bei dieser Ausführungsvariante der Lageranordnung 1 vorgesehen, dass sowohl das erste als auch das zweite Bauteil 5, 7 durch je eine Pleuelstange des Kurbeltriebes gebildet ist. Dabei weist sowohl das erste Bauteil 5 als auch das zweite Bauteil 7 je zumindest einen schleifenförmig angeordneten Leiter 8 und je zumindest einen Permanentmagneten 9 auf, die insbesondere jeweils einen Verbraucher 4 von elektrischer Energie versorgen. Die elektrischen Leiter 8 können neben den Permanentmagneten 9 angeordnet sein. Neben bedeutet dabei sowohl seitlich, also auch (schräg) oberhalb oder (schräg) unterhalb. Bei der Ausführungsvariante der Lageranordnung 1 nach Fig. 5 sind sie in der Axialrichtung 6 (verläuft in Fig. 5 senkrecht auf die Papierebene) nicht hintereinander angeordnet. Die Abfolge der Anordnung von elektrischem Leiter 8 und Permanentmagnet 9 auf dem ersten Bauteil 5 ist dabei spiegelbildlich zur Abfolge von elektrischem Leiter 8 und Permanentmagnet 9 auf dem zweiten Bauteil, wie dies aus Fig. 5 zu ersehen ist. Damit gelangt der elektrische Leiter 8 des ersten Bauteils 5 in eine zum Permanentmagnet 9 des zweiten Bauteils 7 gegenüberliegende Stellung, wenn der elektrische Leiter 8 des zweiten Bauteils 7 ebenfalls eine zum Permanentmagnet 9 des ersten Bauteils 5 gegenüberliegende Stellung einnimmt.

Die wiederholende Relativbewegung der beiden Bauteile 5, 7 zueinander erfolgt bei dieser Ausführungsvariante durch aufgrund der Drehbewegung der Kurbelwelle, die zu einer Veränderung der Stellung der beiden Pleuelstangen zueinander führt. Dabei verändert sich der Winkel, den die beiden Pleuelstangen miteinander einschließen (in Ansicht von vorne betrachtet).

Es ist bei der Ausführungsvariante der Lageranordnung 1 nach Fig. 5 auch möglich, dass der schleifenförmig angeordnete elektrische Leiter 8 des ersten Bauteils 5 in der Axialrichtung 6 hinter dem Permanentmagneten 9 des ersten Bauteils 5 angeordnet ist. In diesem Fall ist zumindest der weitere Bauteil 11 vorhanden, z.B. jener weitere Bauteil 11, der in den Fig. 1 und 2 dargestellt ist, sodass beispielsweise der schleifenförmig angeordnete Leiter 8 des ersten Bauteils 5 mit dem Permanentmagneten 9 der zweiten Pleuelstange und der Permanentmagnet 9 mit dem schleifenförmig angeordneten Leiter 8 des weiteren Bauteils 11 (oder umgekehrt) zusammenwirken.

Die Ausführungsbeispiele zeigen bzw. beschreiben mögliche Ausführungsvarianten der Lageranordnung 1, wobei auch Kombinationen der einzelnen Ausführungsvarianten untereinander möglich sind.

Die Erfindung ist durch die angehängten Ansprüchen definiert.

Der Ordnung halber sei abschließend darauf hingewiesen, dass zum besseren Verständnis des Aufbaus der Lageranordnung 1 deren Elemente nicht zwingenderweise maßstäblich dargestellt wurden.

### Bezugszeichenaufstellung

- 1: Lageranordnung
- 2: Gleitlagerelement
- 3: Lageraufnahme
- 4: Verbraucher
- 5: Bauteil
- 6: Axialrichtung
- 7: Bauteil
- 8: Leiter
- 9: Permanentmagnet
- 10: Stirnfläche
- 11: Bauteil
- 12: Sensor
- 13: Telemetrie-Vorrichtung
- 14: Schmierspalt

## Patentansprüche

1. Lageranordnung (1) umfassend zumindest ein Gleitlagerelement (2), zumindest einen Verbraucher (4) von elektrischer Energie und zumindest eine Energieerzeugungseinrichtung zur autarken Bereitstellung der elektrischer Energie, wobei die Lageranordnung (1) weiter ein erstes Bauteil (5) und ein in der Axialrichtung (6) der Lageranordnung (1) neben dem ersten Bauteil (5) angeordnetes zweites Bauteil (7) aufweist, die wiederholend relativ zueinander bewegbar angeordnet sind, und wobei die Energieerzeugungseinrichtung zumindest einen schleifenförmig angeordneten elektrischen Leiter (8) und zumindest einen Permanentmagneten (9) aufweist, wobei der elektrische Leiter (8) an dem ersten Bauteil (5) und der Permanentmagnet (9) an dem zweiten Bauteil (7) angeordnet sind, sodass der schleifenförmig angeordnete elektrische Leiter (8) und der Permanentmagnet (9) durch die wiederholende Relativbewegung der beiden Bauteile (5, 7) zueinander wiederholend in eine gegenüberliegende Stellung bringbar sind, **dadurch gekennzeichnet, dass**
- an dem ersten Bauteil (5) ein zweiter Permanentmagnet (9) und an dem zweiten Bauteil (7) ein zweiter elektrischer Leiter (8) angeordnet sind, sodass die schleifenförmig angeordneten elektrischen Leiter (8) und die Permanentmagneten (9) durch die wiederholende Relativbewegung der beiden Bauteile (5, 7) zueinander wiederholend in eine gegenüberliegende Stellung bringbar sind, wobei das erste Bauteil (5) eine Pleuelstange eines Kurbeltriebes ist und das zweite Bauteil (7) eine zweite Pleuelstange des Kurbeltriebes ist, oder
- das erste Bauteil (5) eine Pleuelstange eines Kurbeltriebes ist und das zweite Bauteil (7) eine Kurbelwange des Kurbeltriebes ist, und dass an der in der Axialrichtung (6) von der Pleuelstange wegweisenden Stirnseite der Kurbelwange ein weiteres Bauteil (11) des Kurbeltriebes angeordnet ist, und auf diesem weiteren Bauteil (11) ein weiterer schleifenförmig angeordneter elektrischer Leiter (8) angeordnet ist, und der Permanentmagnet (9) in einer in der Axialrichtung (6) durch das zweite Bauteil (7) durchgehenden Ausnehmung angeordnet ist.

2. Lageranordnung (1) nach Anspruch 1, **dadurch gekennzeichnet, dass** der Verbraucher (4) von elektrischer Energie zumindest einen Sensor (12) aufweist, der mit einer Datenübertragungseinrichtung zur, insbesondere drahtlosen, Datenübertragung an einen Empfänger der Daten verbunden ist.

3. Lageranordnung (1) nach Anspruch 1 oder 2, **dadurch gekennzeichnet, dass** der schleifenförmig angeordnete elektrische Leiter (8) in einem ersten Totpunkt des Kurbeltriebes angeordnet ist.

4. Lageranordnung (1) nach Anspruch 1, **dadurch gekennzeichnet, dass** der weitere schleifenförmig angeordnete elektrische Leiter (8) in einem zweiten Totpunkt des Kurbeltriebes angeordnet ist.

5. Lageranordnung (1) nach Anspruch 1, **dadurch gekennzeichnet, dass** das weitere Bauteil (11) ein Zahnrad oder eine Hauptlageraufnahme des Kurbeltriebes ist.

6. Lageranordnung (1) nach einem der Ansprüche 2 bis 5, **dadurch gekennzeichnet, dass** der Sensor (12) in eine radial innerste Schicht des Gleitlagerelementes (2) eingebettet ist.

7. Lageranordnung (1) nach Anspruch 2 bis 6, **dadurch gekennzeichnet, dass** die Datenübertragungseinrichtung am oder zumindest teilweise in einem Pleuelschaft der Pleuelstange angeordnet ist.

8. Lageranordnung (1) nach einem der Ansprüche 1 bis 7, **dadurch gekennzeichnet, dass** an oder zumindest teilweise in dem ersten Bauteil (5) eine Telemetrie-Vorrichtung (13) angeordnet ist.

9. Verfahren zur Versorgung eines Verbrauchers (4) von elektrischer Energie, der in einer Lageranordnung (1) umfassend zumindest ein Gleitlagerelement (2) angeordnet ist, mit elektrischer Energie, die in zumindest einer Energieerzeugungseinrichtung der Lageranordnung (1) zur autarken Bereitstellung der elektrischer Energie erzeugt wird, wobei die Lageranordnung (1) weiter ein erstes Bauteil (5) und ein in der Axialrichtung (6) der Lageranordnung (1) neben dem ersten Bauteil (5) angeordnetes zweites Bauteil (7) aufweist, die wiederholend relativ zueinander bewegt werden, und wobei für die Erzeugung der Energie die Energieerzeugungseinrichtung mit zumindest einem schleifenförmig angeordneten elektrischen Leiter (8) und zumindest einem Permanentmagneten (9) ausgebildet wird, wobei der elektrische Leiter (8) an dem ersten Bauteil (5) und der Permanentmagnet (9) an dem zweiten Bauteil (7) angeordnet werden, und dass der schleifenförmig angeordnete elektrische Leiter (8) und der Permanentmagnet (9) durch die wiederholende Relativbewegung der beiden Bauteile (5, 7) zueinander in eine wiederholende gegenüberliegende Stellung verbracht werden, **dadurch gekennzeichnet, dass**
- an dem ersten Bauteil (5) ein zweiter Permanentmagnet (9) und an dem zweiten Bauteil (7) ein zweiter elektrischer Leiter (8) angeordnet werden, sodass die schleifenförmig angeordneten elektrischen Leiter (8) und die Permanentmagneten (9) durch die wiederholende Relativbewegung der beiden Bauteile (5, 7) zueinander wiederholend in eine gegenüberliegende Stellung verbracht werden, oder
- als erstes Bauteil (5) eine Pleuelstange eines Kurbeltriebes und als zweite Bauteil (7) eine Kurbelwange des Kurbeltriebes verwendet werden, und dass an der in der Axialrichtung (6) von der Pleuelstange wegweisenden Stirnseite der Kurbelwange ein weiteres Bauteil (11) des Kurbeltriebes angeordnet wird, und auf diesem weiteren Bauteil (11) ein weiterer schleifenförmig angeordneter elektrischer Leiter (8) angeordnet wird, und der Permanentmagnet (9) in einer in der Axialrichtung (6) durch den zweiten Bauteil (7) durchgehenden Ausnehmung angeordnet wird.

## Claims

1. A bearing assembly (1) comprising at least one sliding bearing element (2), at least one consumer (4) of electrical energy and at least one energy generating device for self-sufficient provision of the electrical energy, wherein the bearing assembly (1) further comprises a first component (5) and a second component (7) arranged next to the first component (5) in the axial direction (6) of the bearing assembly (1), said components (5, 7) being arranged so as to be movable repetitively relative to one another, and wherein the energy generating device has at least one electrical conductor (8) arranged in a loop shape and at least one permanent magnet (9), wherein the electrical conductor (8) is arranged on the first component (5), and the permanent magnet (9) is arranged on the second component (7), such that the electrical conductor (8) arranged in a loop shape and the permanent magnet (9) can repeatedly be brought into opposing positions by means of the repetitive relative movement of the two components (5, 7) with respect to one another, **characterized in that**
- a second permanent magnet (9) is arranged on the first component (5) and a second electrical conductor (8) is arranged on the second component (7), so that the electrical conductors (8) arranged in a loop shape and the permanent magnets (9) can repeatedly be brought into opposing positions by means of the repetitive relative movement of the two components (5, 7) with respect to one another, wherein the first component (5) is a connecting rod of a crank drive, and the second component (7) is a second connecting rod of the crank drive, or
- the first component (5) is a connecting rod of a crank drive, and the second component (7) is a crank cheek of the crank drive, and that a further component (11) of the crank drive is arranged on the front side of the crank cheek pointing away from the connecting rod in the axial direction (6), and a further electrical conductor (8) arranged in a loop shape is arranged on this further component (11), and the permanent magnet (9) is arranged in a through hole passing through the second component (7) in the axial direction (6).

2. The bearing assembly (1) according to claim 1, **characterized in that** the consumer (4) of electrical energy has at least one sensor (12), which is connected to a data transmission device for transmitting data, in particular wirelessly, to a receiver of the data.

3. The bearing assembly (1) according to claim 1 or 2, **characterized in that** the electrical conductor (8) arranged in a loop shape is arranged at a first dead center of the crank drive.

4. The bearing assembly (1) according to claim 1, **characterized in that** the further electrical conductor (8) arranged in a loop shape is arranged at a second dead center of the crank drive.

5. The bearing assembly (1) according to claim 1, **characterized in that** the further component (11) is a gear or a main bearing receptacle of a crank drive.

6. The bearing arrangement (1) according to one of claims 2 to 5, **characterized in that** the sensor (12) is embedded in a radially innermost layer of the sliding bearing element (2).

7. The bearing assembly (1) according to claim 2 to 6, **characterized in that** the data transmission device is arranged on or at least partially in a connecting rod shaft of the connecting rod.

8. The bearing assembly device (1) according to one of claims 1 to 7, **characterized in that** a telemetry device (13) is arranged on or at least partially in the first component (5).

9. A method for supplying a consumer (4) of electrical energy, which is arranged in a bearing assembly (1) comprising at least one sliding bearing element (2), with electrical energy, which is generated in at least one energy generating device of the bearing assembly (1) for self-sufficient provision of the electrical energy, wherein the bearing assembly (1) further comprises a first component (5) and a second component (7) arranged next to the first component (5) in the axial direction (6) of the bearing assembly (1), said components (5, 7) being arranged so as to be movable repetitively relative to one another, and wherein for generating the energy, the energy generating device is formed having at least one electrical conductor (8) arranged in a loop shape and at least one permanent magnet (9), wherein the electrical conductor (8) is arranged on the first component (5), and the permanent magnet (9) is arranged on the second component (7), and that the electrical conductor (8) arranged in a loop shape and the permanent magnet (9) are brought into repeating opposing positions by means of the repetitive relative movement of the two components (5, 7) with respect to one another, **characterized in that**
- a second permanent magnet (9) is arranged on the first component (5) and a second electrical conductor (8) is arranged on the second component (7), so that the electrical conductors (8) arranged in a loop shape and the permanent magnets (9) are repeatedly brought into opposing positions by means of the repetitive relative movement of the two components (5, 7) with respect to one another, or
- a connecting rod of a crank drive is used as the first component (5), and a crank cheek of the crank drive is used as the second component (7), and that a further component (11) of the crank drive is arranged on the front side of the crank cheek pointing away from the connecting rod in the axial direction (6), and that a further electrical conductor (8) arranged in a loop shape is arranged on this further component (11), and the permanent magnet (9) is arranged in a through hole passing through the second component (7) in the axial direction (6).

## Revendications

1. Ensemble palier (1) comprenant au moins un élément formant palier lisse (2), au moins un consommateur (4) d'énergie électrique et au moins un dispositif de production d'énergie permettant de fournir de l'énergie électrique de manière autonome, dans lequel l'ensemble palier (1) présente en outre un premier composant (5) et un second composant (7), agencé à côté du premier composant (5) dans la direction axiale (6) de l'ensemble palier (1), qui sont agencés de manière à pouvoir se déplacer l'un par rapport à l'autre de manière répétitive, et dans lequel le dispositif de production d'énergie présente au moins un conducteur électrique (8) agencé en forme de boucle et au moins un aimant permanent (9), dans lequel le conducteur électrique (8) est agencé au niveau du premier composant (5) et l'aimant permanent (9) est agencé au niveau du second composant (7) de sorte que le conducteur électrique (8) agencé en forme de boucle et l'aimant permanent (9) peuvent être amenés de manière répétitive dans une position où ils se font face grâce au mouvement relatif répétitif des deux composants (5, 7), **caractérisé en ce que**
- un second aimant permanent (9) est agencé au niveau du premier composant (5) et un second conducteur électrique (8) est agencé au niveau du second composant (7) de sorte que les conducteurs électriques (8) agencés en forme de boucle et les aimants permanents (9) peuvent être amenés de manière répétitive dans une position où ils se font face grâce au mouvement relatif répétitif des deux composants (5, 7), dans lequel le premier composant (5) est une bielle d'un mécanisme à manivelle et le second composant (7) est une seconde bielle du mécanisme à manivelle, ou
- le premier composant (5) est une bielle d'un mécanisme à manivelle et le second composant (7) est une flasque de manivelle du mécanisme à manivelle, et un composant supplémentaire (11) du mécanisme à manivelle est agencé au niveau de la face avant de la flasque de manivelle se détournant de la bielle dans la direction axiale (6), et un conducteur électrique supplémentaire (8) agencé en forme de boucle est agencé sur ledit composant supplémentaire (11), et l'aimant permanent (9) est agencé dans un évidement traversant le second composant (7) dans la direction axiale (6).

2. Ensemble palier (1) selon la revendication 1, **caractérisé en ce que** le consommateur (4) d'énergie électrique présente au moins un capteur (12) relié à un dispositif de transmission de données permettant de transmettre des données, en particulier sans fil, à un récepteur des données.

3. Ensemble palier (1) selon la revendication 1 ou 2, **caractérisé en ce que** le conducteur électrique (8) agencé en forme de boucle est agencé dans un premier point mort du mécanisme à manivelle.

4. Ensemble palier (1) selon la revendication 1, **caractérisé en ce que** le conducteur électrique supplémentaire (8) agencé en forme de boucle est agencé dans un second point mort du mécanisme à manivelle.

5. Ensemble palier (1) selon la revendication 1, **caractérisé en ce que** le composant supplémentaire (11) est une roue dentée ou un logement de palier principal du mécanisme à manivelle.

6. Ensemble palier (1) selon l'une quelconque des revendications 2 à 5, **caractérisé en ce que** le capteur (12) est incorporé dans une couche radialement la plus intérieure de l'élément formant palier lisse (2).

7. Ensemble palier (1) selon les revendications 2 à 6, **caractérisé en ce que** le dispositif de transmission de données est agencé au niveau d'une tige de bielle de la bielle ou au moins partiellement dans celle-ci.

8. Ensemble palier (1) selon l'une quelconque des revendications 1 à 7, **caractérisé en ce qu'**un dispositif de télémétrie (13) est agencé au niveau du premier composant (5) ou au moins partiellement dans celui-ci.

9. Procédé d'alimentation d'un consommateur (4) d'énergie électrique, agencé dans un ensemble palier (1) comprenant au moins un élément formant palier lisse (2), avec de l'énergie électrique produite dans au moins un dispositif de production d'énergie de l'ensemble palier (1) permettant de fournir de l'énergie électrique de manière autonome, dans lequel l'ensemble palier (1) présente en outre un premier composant (5) et un second composant (7), agencé à côté du premier composant (5) dans la direction axiale (6) de l'ensemble palier (1), qui sont déplacés de manière répétitive l'un par rapport à l'autre, et dans lequel, afin de produire ladite énergie, le dispositif de production d'énergie est réalisé avec au moins un conducteur électrique (8) agencé en forme de boucle et au moins un aimant permanent (9), dans lequel le conducteur électrique (8) est agencé au niveau du premier composant (5) et l'aimant permanent (9) est agencé au niveau du second composant (7), et le conducteur électrique (8) agencé en forme de boucle et l'aimant permanent (9) sont amenés dans une position répétitive où ils se font face grâce au mouvement relatif répétitif des deux composants (5, 7), **caractérisé en ce que**
- un second aimant permanent (9) est agencé au niveau du premier composant (5) et un second conducteur électrique (8) est agencé au niveau du second composant (7) de sorte que les conducteurs électriques (8) agencés en forme de boucle et les aimants permanents (9) sont amenés de manière répétitive dans une position où ils se font face grâce au mouvement relatif répétitif des deux composants (5, 7) l'un par rapport à l'autre, ou
- une bielle d'un mécanisme à manivelle fait office de premier composant (5) et une flasque de manivelle du mécanisme à manivelle fait office de second composant (7), et **en ce qu'**un composant supplémentaire (11) du mécanisme à manivelle est agencé au niveau de la face avant de la flasque de manivelle se détournant de la bielle dans la direction axiale (6), et un conducteur électrique supplémentaire (8) agencé en forme de boucle est agencé sur ledit composant supplémentaire (11), et l'aimant permanent (9) est agencé dans un évidement traversant le second composant (7) dans la direction axiale (6).
